# EUROPEAN PATENT APPLICATION

(11) **EP 4 831 618 A1**
(43) Date of publication of application: **28.10.2026**
(21) Application number: 26174144.1
(22) Date of filing: 23.04.2026
(51) Int. Cl.: G01N 21/3504, G01M 3/04

(54) **AN INFRARED GAS SNIFFER**

(30) Priority: 27.04.2025 CN 202510536163
(71) Applicant: Jiangsu Jingchuang Electronics Co., Ltd, Xuzhou, Jiangsu 221116 (CN)
(72) Inventor: PAN, Lianghui, Xuzhou, 221116 (CN); LI, Shuangyun, Xuzhou, 221116 (CN); LIN, Chong, Xuzhou, 221116 (CN); BIAN, Shunzai, Xuzhou, 221116 (CN)
(74) Representative: Lanchava, Bakuri

(57) **Abstract**

The present application relates to the technical field of gas detection, in particular to an infrared gas sniffer. The infrared gas sniffer comprises: a gas pump configured to draw the gas to be detected into a gas absorption chamber at either a first power or a second power; an infrared detection unit including the gas absorption chamber, a detector, and an infrared light source; a control unit connected to the gas pump and the detector, and configured to control the operation power of the gas pump and determine the concentrations of the gas to be detected when the gas pump operates at the second power and the first power based on the infrared light intensities detected by the detector when the gas pump operates at the first power and the second power as well as the gas flow rates of the gas to be detected when the gas pump operates at the first power and the second power. The infrared gas sniffer of the present application can accurately detect gas concentration and leakage rate of leakage point without the need of reference gas.

## Description

### Technical Field

The preset invention relates to the technical field of gas detection, in particular to an infrared gas sniffer.

### Background Art

Gas sniffer is a device for detecting and analyzing gas leakage, and is widely used in the fields including industries, environmental protection, and security. It can detect various gases, including but not limited to flammable gases, toxic gases, volatile organic compounds (VOCs), etc.

Among gas sniffers, infrared gas sniffers that use Non-Dispersive Infrared (NDIR) technology for gas detection are widely used in various gas detection scenarios due to their advantages of not directly contacting with gas and having a long service life.

In the prior art, infrared gas sniffers often require reference gas to assist in determining the concentration of the gas to be detected. On the one hand, this method leads to a complex structure and an increased cost of the infrared gas sniffers, and on the other hand, the reference gas used in this method is easily contaminated by the gas to be detected, resulting in a low detection accuracy.

### Contents of the Invention

In order to address shortcomings in the prior art, an object of the present application is to provide an infrared gas sniffer that can accurately detect the concentration of gas without the need for reference gas.

To achieve the above object, the present application provides an infrared gas sniffer comprising:
A gas pump, which is configured to draw the gas to be detected into a gas absorption chamber at either a first power or a second power, wherein the first power is different from the second power, the second power is not less than 30% of the full power of the gas pump, and the first power is greater than the second power;
An infrared detection unit, including the gas absorption chamber, a detector, and an infrared light source; the infrared light source is arranged at the end of the gas absorption chamber where the gas enters; the detector is arranged at the end of the gas absorption chamber where the gas exits for detecting the intensity of the received infrared light;
A control unit, which is connected to the gas pump and the detector, and configured to control the operation power of the gas pump and determine the concentrations of the gas to be detected when the gas pump operates at the second power and the first power, based on the infrared light intensities detected by the detector when the gas pump operates at the first power and the second power as well as the gas flow rate of the gas to be detected when the gas pump operates at the first power and the second power.

Furthermore, the specific step for determining the concentrations of the gas to be detected when the gas pump operates at the second power and the first power adopts the following equations: ${C}_{2} = ln \frac{{I}_{t 2}}{{I}_{t 1}} ∗ \frac{1}{Kl} ∗ \frac{{Q}_{1}}{{Q}_{2} - {Q}_{1}} ;$ ${C}_{1} = ln \frac{{I}_{t 2}}{{I}_{t 1}} ∗ \frac{1}{Kl} ∗ \frac{{Q}_{2}}{{Q}_{2} - {Q}_{1}} ;$

Wherein, C₂ refers to the concentration of the gas to be detected when the gas pump operates at the second power, C₁ refers to the concentration of the gas to be detected when the gas pump operates at the first power, K refers to the gas absorption coefficient of the gas to be detected, 1 refers to the thickness of the gas to be detected in the gas absorption chamber, Iₜ₁ refers to the infrared light intensity detected by the detector when the gas pump operates at the first power, Iₜ₂ refers to the infrared light intensity detected by the detector when the gas pump operates at the second power.

Furthermore, the gas flow rates of the gas to be detected when the gas pump operates at the first power and the second power are obtained before delivery through pre-detection by means of flow meter when the gas pump operates at the first power and the second power, and are configured in the control unit.

Furthermore, said infrared gas sniffer further comprises:
A flow meter which is connected to the control unit and arranged in the gas passage, and configured to detect the gas flow rate of the gas to be detected when the gas pump operates at the first power or the second power and output it to the control unit.

Furthermore, the infrared detection unit further comprises an optical filter, and the optical filter is arranged at either end of the gas absorption chamber.

Furthermore, said infrared gas sniffer further comprises:
A feedback unit connected to the control unit and configured to feed the detection result back to the user.

Furthermore, the feedback unit includes any one of a buzzer, an indicator light, and a display.

Furthermore, the first power is 100% of the full power of the gas pump, and the second power is 40% of the full power of the gas pump.

To achieve the above object, the present application further provides a method for detecting refrigerant leakage, which is applied to the infrared gas sniffer as described above, said method comprises:
Controlling the gas pump to operate at the first power, and detecting, by the detector, the infrared light intensity at the first power;
Controlling the gas pump to operate at the second power, and detecting, by the detector, the infrared light intensity at the second power; and
Calculating to obtain the gas concentrations of the gas to be detected when the gas pump operates at the first power and/or the second power, based on the real-time detected or pre-determined gas flow rates when the gas pump operates at the first power and the second power, as well as the infrared light intensity when the gas pump operates at the first power and the infrared light intensity when the gas pump operates at the second power.

The infrared gas sniffer of the present application has a simple structure without requiring reference gas and can detect the concentration of the gas to be detected simply with a single light source and a single detector, and thus the infrared gas sniffer has a simple and can be easily manufactured with low cost.

The infrared gas sniffer of the present application can detect the concentration of the gas to be detected with high detection accuracy by detecting the light intensities of the gas to be detected when the gas pump operates at different powers.

Other features and advantages of the present application will be set forth in the following description, and will partially become obvious from the description or understood by implementing the present application.

### Description of Drawings

The accompanying drawings are provided for further understanding of the present application, form a part of the description, and are used to explain the present application in conjunction with examples of the present application, but do not constitute any limitation to the present application. In the drawings:
FIG. 1 is a schematic block diagram of the infrared gas sniffer in Example 1 of the present application;
FIG. 2 is a schematic structural diagram of the infrared gas sniffer in Example 1 of the present application;
FIG. 3 shows the waveform diagram of the detection signal detected by the detector during power switching of the gas pump in an air environment;
FIG. 4 shows the waveform diagram of the detection signal detected by the detector during power switching of the gas pump in a leakage environment;
FIG. 5 shows the waveform diagram of the detection signal detected by the detector during power switching of the gas pump in another leakage environment;
FIG. 6 is a schematic block diagram of the infrared gas sniffer in Example 2 of the present application; and
FIG. 7 is a schematic structural diagram of the infrared gas sniffer in Example 2 of the present application.

Description of reference numerals:
10 - infrared gas sniffer; 11 - gas inlet; 12 - gas outlet; 13 - infrared detection unit; 20 - filter; 22 - infrared light source; 23 - optical filter; 24 - gas absorption chamber; 25 - detector; 26 - gas pump; 30 - first gas conduit; 32 - second gas conduit; 33 - third gas conduit; 40- flow meter; 100 - control unit; 200 - feedback unit.

### Embodiments

Hereunder examples of the present application will be described in more detail with reference to the accompanying drawings. Although the drawings show some examples of the present application, it should be understood that the present application can be implemented in various forms and should not be interpreted to be limited to the examples set forth herein. On the contrary, these examples are provided for a thorough and full understanding the present application. It should be understood that the accompanying drawings and the examples of the present application are simply for exemplary purposes and are not intended to limit the protection scope of the present application.

It should be understood that the various steps recorded in method embodiments of the present application can be carried out in different orders and/or in parallel. In addition, the method embodiments can include additional steps and/or omit the shown steps. The scope of the present application is not limited in this aspect.

The term "including" and its variations as used herein refers to open-ended including, that is, "including but not limited to". The term "based on" refers to "at least partially based on". The term "an example" refers to "at least one example". The term "another example" refers to "at least one additional example". The term "some examples" refers to "at least some examples". The definitions related to other terms will be given in the description below.

It should be noted that "a/an" and "a plurality of" as used in the present application are illustrative rather than restrictive, and those skilled in the art should understand that, unless otherwise explicitly stated in the context, these words should be understood as "one or more". "More" should be understood as two or more.

Hereunder examples of the present application will be described in detail with reference to the accompanying drawings.

### Example 1

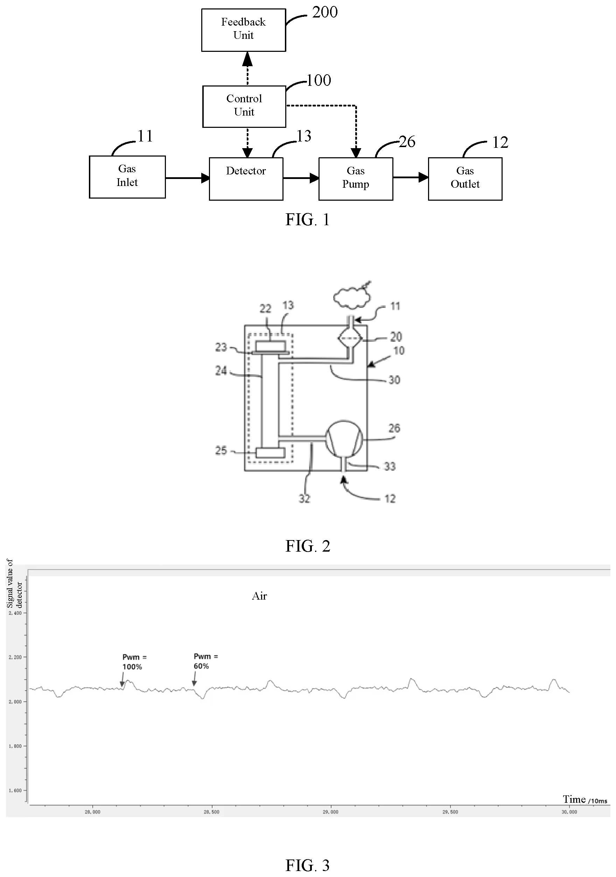

An example of the present application provides an infrared gas sniffer that can improve the gas detection accuracy without the need of reference gas. The infrared gas sniffer of the present application will be described in detail with reference to Figs. 1-5, and the infrared gas sniffer comprises:
A gas pump 26, which is configured to draw the gas to be detected into a gas absorption chamber 24 at either a first power or a second power, wherein the first power is different from the second power, the second power is not less than 30% of the full power of the gas pump, and the first power is greater than the second power;
An infrared detection unit 13 including the gas absorption chamber 24, a detector 25, and an infrared light source 22, wherein the infrared light source 22 is arranged at the end of the gas absorption chamber 24 where the gas enters; the detector 25 is arranged at the end of the gas absorption chamber 24 where the gas exits for detecting the intensity of the received infrared light;
A control unit 100, which is connected to the gas pump 26 and the detector 25 and configured to control the operation power of the gas pump and determine, based on the infrared light intensities detected by the detector 25 when the gas pump 26 operates at the first power and the second power as well as the gas flow rates of the gas to be detected when the gas pump 26 operates at the first power and the second power, the concentrations of the gas to be detected when the gas pump 26 operates at the second power and the first power.

In this embodiment, the gas absorption chamber 24 is connected to a gas inlet 11 via a first gas conduit 30, the gas absorption chamber 24 is connected to the gas pump 26 via a second gas conduit 32, and the gas pump 26 is connected to a gas outlet 12 via a third gas conduit 33.

In this embodiment, the specific step for determining the concentrations of the gas to be detected when the gas pump 26 operates at the second power and the first power adopts the following equations: ${c}_{2} = ln \frac{{I}_{t 2}}{{I}_{t 1}} ∗ \frac{1}{Kl} ∗ \frac{{Q}_{1}}{{Q}_{2} - {Q}_{1}} ;$ ${c}_{1} = ln \frac{{I}_{t 2}}{{I}_{t 1}} ∗ \frac{1}{Kl} ∗ \frac{{Q}_{2}}{{Q}_{2} - {Q}_{1}} ;$

Wherein, C₂ refers to the concentration of the gas to be detected when the gas pump 26 operates at the second power, C₁ refers to the concentration of the gas to be detected when the gas pump 26 operates at the first power, K refers to the gas absorption coefficient of the gas to be detected, 1 refers to the thickness of the gas to be detected in the gas absorption chamber, Iₜ₁ refers to the infrared light intensity detected by the detector 25 when the gas pump 26 operates at the first power, and Iₜ₂ refers to the infrared light intensity detected by the detector 25 when the gas pump 26 operates at the second power.

It should be noted that the principle for determining the concentrations of the gas to be detected when the air pump operates at the second power and the first power is as follows:
Within a certain period of time, the leakage rate of the gas to be detected at a detection point is constant, which is set to be Qₗₑₐₖ, and assuming that the total flow rate of the gas drawn by the gas pump 26 operating at the first power is known to be Q₁ and the total flow rate of the gas drawn by the gas pump 26 operating at the second power is known to be Q₂, then the concentrations of the gas to be detected in the gas absorption chamber at two powers are respectively as follows: ${c}_{1} = \frac{{Q}_{leak}}{{Q}_{1}} ;$ ${c}_{2} = \frac{{Q}_{leak}}{{Q}_{2}} ;$

Wherein, ci is the concentration of the gas to be detected when the gas pump 26 operates at the first power, and c₂ is the concentration of the gas to be detected when the gas pump 26 operates at the second power.

Therefore, the following can be obtained: $\frac{{c}_{1}}{{c}_{2}} = \frac{{Q}_{2}}{{Q}_{1}} ;$

Also, the light intensities detected by the detector 25 at the two concentrations can be obtained as follows respectively according to Beer-Lambert's law: ${I}_{t 1} = {I}_{0} ∗ {e}^{- {Kc}_{1} l} ;$ ${I}_{t 2} = {I}_{0} ∗ {e}^{- {Kc}_{2} l} ;$

Wherein, I₀ refers to incident light intensity, K refers to the gas absorption coefficient of the gas to be detected, 1 refers to the thickness of the gas to be detected in the gas absorption chamber, Iₜ₁ refers to the infrared light intensity detected by the detector when the gas pump operates at the first power, Iₜ₂ refers to the infrared light intensity detected by the detector when the gas pump operates at the second power.

Therefore, the following can be obtained by bringing these parameters into the equations: ${c}_{2} = ln \frac{{I}_{t 2}}{{I}_{t 1}} ∗ \frac{1}{Kl} ∗ \frac{{Q}_{1}}{{Q}_{2} - {Q}_{1}} ;$ ${c}_{1} = ln \frac{{I}_{t 2}}{{I}_{t 1}} ∗ \frac{1}{Kl} ∗ \frac{{Q}_{2}}{{Q}_{2} - {Q}_{1}} ;$

In this embodiment, the gas flow rate Q₁ and the gas flow rate Q₂ of the gas to be detected when the gas pump operates at the first power and the second power are obtained before delivery through the pre-detection by means of a flow meter when the gas pump operates at the first power and the second power, and are configured in the control unit 100.

It should be noted that the power of the gas pump is controlled by controlling the drive PWM of the gas pump.

It should be noted that the gas flow rate Q₁ and the gas flow rate Q₂ are positively correlated with the operation power of the gas pump 26, that is, the greater the power, the greater the gas flow rate will be. In practical application, the ratio of gas flow rate Q₁ to gas flow rate Q₂ can also be directly calculated based on the drive PWM value of the gas pump 26.

It can be understood that the specific parameters and ratios of the first power and the second power can be adaptively adjusted according to the actually used gas passage, the gas pump's power and the gas to be detected.

It should be noted that the smaller the difference between the first power and the second power, the lower the measurement accuracy will be. When the difference between the first power and the second power is very small, to achieve precise measurement, an amplifying circuit can also be used for assistance.

In addition, when the power of the gas pump drops below a certain level, the gas pump will fail to start, making it impossible to carry out the detection. After testing and verification, it is found that the power of the gas pump must be at least above 30% of the full power to avoid affecting the normal detection.

In this embodiment, the first power is 100% of the full power of the gas pump, and the second power is 40% of the full power of the gas pump. Under this mode, the detection accuracy is the highest.

In this embodiment, the infrared detection unit 13 further includes an optical filter 23, which is arranged at either end of the gas absorption chamber 24, that is, the optical filter 23 may be arranged at the end where the detector 25 is located to filter the infrared light band entering the detector 25, or the optical filter 23 may be arranged at both ends where the infrared light source 22 and the detector 25 are located.

In this embodiment, the gas sniffer further comprises:
A feedback unit 200 connected to the control unit 100 for feeding detection results back to the user.

It should be noted that the detection results may be the concentration of the gas to be detected when the gas pump 26 operates at the second power or the concentration of the gas to be detected when the gas pump 26 operates at the first power, or the detection results may include both the concentration of the gas to be detected when the gas pump 26 operates at the second power and the concentration of the gas to be detected when the gas pump 26 operates at the first power.

In some other embodiments, the detection results may also include signal values detected at two power levels.

In this embodiment, the feedback unit 200 includes any one of a buzzer, an indicator light, and a display.

In this embodiment, the detector 25 includes any one of a pyroelectric sensor and a thermopile sensor.

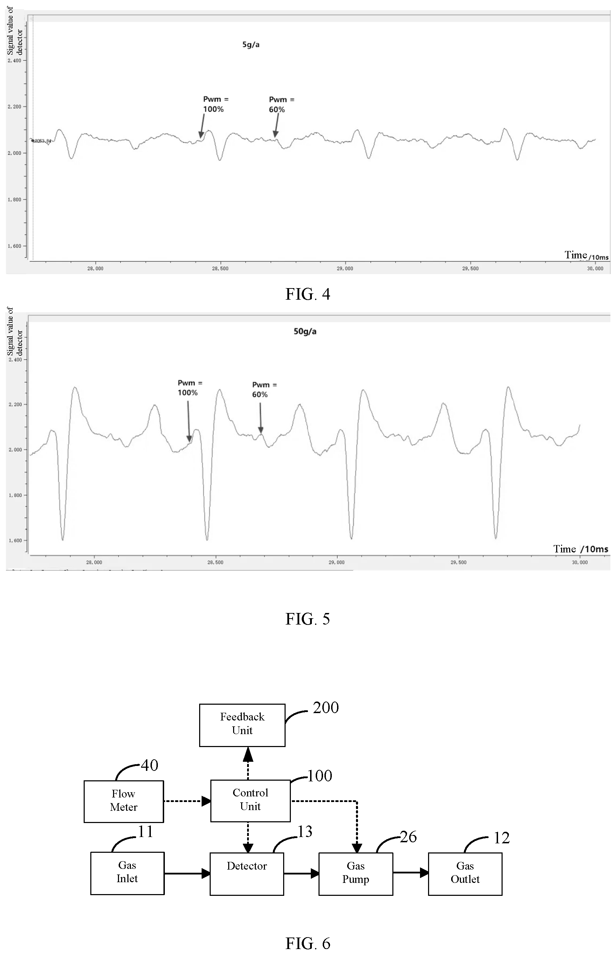

As an example, when the gas sniffer is used for detection in different environments, the signal variation of the detector 25 is shown in Figs. 3 to 5, where Pwm = 100% indicates that the gas pump 26 is controlled to operate at its full power, Pwm = 60% indicates that the gas pump 26 is controlled to operate at its 60% power, wherein the horizontal axis represents time, the vertical axis represents the signal detected by detector 25. As shown in FIG. 3, in air environment, when the gas pump 26 operates at its full power, a positive peak appears in the detection signal with a peak value of approximately 50. When the gas pump 26 operates at its 60% power, a negative peak appears in the detection signal with a peak value of approximately 50. As shown in FIG. 4, the gas inlet is placed at a gas leakage point of the gas to be detected with an annual leakage amount of 5g, and when the gas pump 26 operates at its full power, a positive peak and an inverted peak appear with the positive peak's peak value being approximately 50 and the inverted peak's peak value being approximately 100, and when the gas pump 26 operates at its 60% power, an inverted peak appears with a peak value of approximately 50. As shown in Fig. 5, the gas inlet is placed at a gas leakage point of the gas to be detected with an annual leakage amount of 50g, and when the gas pump 26 operates at its full power, a positive peak and an inverted peak appear with the positive peak's peak value being approximately 50 and the inverted peak's peak value being approximately 450. When the gas pump 26 operates at its 60% power, an inverted peak appears with a peak value of approximately 50.

It can be understood that when the infrared gas sniffer is used for detection, the leakage point can be determined by changing detection position and observing detection results of the infrared gas sniffer.

### Example 2

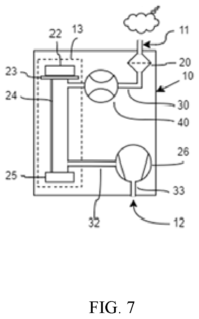

An example of the present application provides an infrared gas sniffer that can improve the gas detection accuracy without the need of reference gas. The infrared gas sniffer of the present application will be described in detail with reference to Figs. 6-7, and as shown in Figs. 6-7, the infrared gas sniffer of Example 2 of the present application is different from that of Example 1 in that:
The infrared gas sniffer further comprises:
A flow meter 40, which is connected to the control unit 100 and arranged in the gas passage for detecting the gas flow rate of the gas to be detected when the gas pump 26 operates at the first power or the second power and outputting it to the control unit 100.

In this embodiment, the flow meter 40 is arranged in the gas passage where the first gas conduit 30 is located.

In some other embodiments, the flow meter 40 can also be arranged in the second gas conduit 32.

In this embodiment, the following equations are used to calculate gas concentrations: ${c}_{2} = ln \frac{{I}_{t 2}}{{I}_{t 1}} ∗ \frac{1}{Kl} ∗ \frac{Q}{{Q}_{2} - {Q}_{1}} ;$ ${c}_{1} = ln \frac{{I}_{t 2}}{{I}_{t 1}} ∗ \frac{1}{Kl} ∗ \frac{{Q}_{2}}{{Q}_{2} - {Q}_{1}} ;$

Where, the gas flow rate Q₂ and the gas flow rate Q₁ are obtained by real-time detecting with the flow meter and the detection effect is more accurate.

The above description only relates to some examples of the present application and the explanation of the technical principles applied therein. Those skilled in the art should understand that the scope of the disclosure involved in the present application is not limited to the technical solutions formed by the specific combination of the above technical features, but also should cover other technical solutions formed by any combination of the above technical features or their equivalent features without departing from the above disclosed concept, for example, a technical solution formed by substituting the above-mentioned features with the technical features having similar functions disclosed in (but not limited to) the present application.

Moreover, although various operations are described in a specific order, it should not be interpreted as requiring these operations to be performed in the indicated specific order or in a sequential order. Under certain circumstances, multitasking and parallel processing may be beneficial. Similarly, although the above discussion includes several implementation details, these should not be interpreted as limitations on the scope of the present application. Some features described in the context of a single example may also be combined to be embodied in a single example. On the contrary, the various features described in the context of a single example can also be embodied separately or in any appropriate sub-combination in multiple examples.

Although the subject matter has been described in language specific to structural features and/or method logical actions, it should be understood that the subject matter defined in the appended claims is not necessarily limited to the specific features or actions described above. On the contrary, the specific features and actions described above are merely examples for implementation of the claims.

## Claims

1. An infrared gas sniffer, **characterized in that** the infrared gas sniffer comprises:
a gas pump configured to draw the gas to be detected into a gas absorption chamber at either a first power or a second power, wherein the second power is not less than 30% of the full power of the gas pump, and the first power is greater than the second power;
an infrared detection unit including the gas absorption chamber, a detector, and an infrared light source; wherein the infrared light source is arranged at the end of the gas absorption chamber where the gas enters; the detector is arranged at the end of the gas absorption chamber where the gas exits for detecting the intensity of the received infrared light;
a control unit, which is connected to the gas pump and the detector, and configured to control the operation power of the gas pump and determine, based on the infrared light intensities detected by the detector when the gas pump operates at the first power and the second power as well as the gas flow rates of the gas to be detected when the gas pump operates at the first power and the second power, the concentrations of the gas to be detected when the gas pump operates at the second power and the first power.

2. The infrared gas sniffer according to claim 1, **characterized in that** the specific step for determining the concentrations of the gas to be detected when the gas pump operates at the second power and the first power adopts the following equations: ${C}_{2} = ln \frac{{I}_{t 2}}{{I}_{t 1}} ∗ \frac{1}{Kl} ∗ \frac{{Q}_{1}}{{Q}_{2} - {Q}_{1}} ;$ ${C}_{1} = ln \frac{{I}_{t 2}}{{I}_{t 1}} ∗ \frac{1}{Kl} ∗ \frac{{Q}_{2}}{{Q}_{2} - {Q}_{1}} ;$ wherein, C₂ refers to the concentration of the gas to be detected when the gas pump operates at the second power, C₁ refers to the concentration of the gas to be detected when the gas pump operates at the first power, K refers to the gas absorption coefficient of the gas to be detected, 1 refers to the thickness of the gas to be detected in the gas absorption chamber, Iₜ₁ refers to the infrared light intensity detected by the detector when the gas pump operates at the first power, and Iₜ₂ refers to the infrared light intensity detected by the detector when the gas pump operates at the second power.

3. The infrared gas sniffer according to claim 1, **characterized in that** the gas flow rates of the gas to be detected when the gas pump operates at the first power and the second power are obtained before delivery through pre-detection by means of a flow meter when the gas pump operates at the first power and the second power, and are configured in the control unit.

4. The infrared gas sniffer according to claim 1, **characterized in that**, said infrared gas sniffer further comprises:
a flow meter connected to the control unit and arranged in the gas passage, and configured to detect the gas flow rate of the gas to be detected when the gas pump operates at the first power or the second power and output it to the control unit.

5. The infrared gas sniffer according to claim 1, **characterized in that** the detector includes any one of a pyroelectric sensor and a thermopile sensor.

6. The infrared gas sniffer according to claim 1, **characterized in that** the infrared detection unit further comprises an optical filter, and the optical filter is arranged at either end of the gas absorption chamber.

7. The infrared gas sniffer according to claim 6, **characterized in that** said infrared gas sniffer further comprises:
a feedback unit connected to the control unit and configured to feed the detection results back to the user.

8. The infrared gas sniffer according to claim 7, **characterized in that** the feedback unit includes any one of a buzzer, an indicator light, and a display.

9. The infrared gas sniffer according to claim 1, **characterized in that** the first power is 100% of the full power of the gas pump, and the second power is 40% of the full power of the gas pump.

10. A method for detecting refrigerant leakage, which is applied to the infrared gas sniffer according to any one of claims 1-9, **characterized in that** the method comprises:
controlling the gas pump to operate at the first power, and detecting, by the detector, the infrared light intensity at the first power;
controlling the gas pump to operate at the second power, and detecting, by the detector, the infrared light intensity at the second power;
calculating the gas concentrations of the gas to be detected when the gas pump operates at the first power and/or the second power, based on the real-time detected or pre-determined gas flow rates when the gas pump operates at the first power and the second power as well as the infrared light intensity when the gas pump operates at the first power and the infrared light intensity when the gas pump operates at the second power.
